# EUROPEAN PATENT APPLICATION

(11) **EP 4 531 459 A1**
(43) Date of publication of application: **02.04.2025**
(21) Application number: 23811425.0
(22) Date of filing: 27.03.2023
(51) Int. Cl.: H04W 36/22, H04W 36/08, H04W 36/38, H04W 92/20

(54) **COMMUNICATION DEVICE, MOBILE COMMUNICATION SYSTEM, CONTROL METHOD, AND PROGRAM**

(30) Priority: 23.05.2022 JP 2022083990
(71) Applicant: CANON KABUSHIKI KAISHA, Tokyo 146-8501 (JP)
(72) Inventor: ONDA, Taiga, Tokyo 146-8501 (JP)
(74) Representative: Canon Europe Limited
(86) International application number: PCT/JP2023/012149
(87) International publication number: WO 2023/228546

(57) **Abstract**

A communication apparatus operating as an IAB donor configured to communicate with a first IAB node in a mobile communication system, comprises: detection means for detecting a second IAB node different from the first IAB node; and transmission means for transmitting, in accordance with detection of the second IAB node by the detection means, a handover request for handing over user equipment connected to the first IAB node to the second IAB node.

## Description

### TECHNICAL FIELD

The present invention relates to load distribution processing of communication in a mobile communication system.

### BACKGROUND ART

In 3GPP^{®} (3rd Generation Partnership Project), IAB (Integrated Access and Backhaul) has been standardized as a communication technique for backhaul. IAB is a technique of simultaneously using, as backhaul communication, access communication between a base station and UE (User Equipment) (PTL 1). For IAB, for example, millimeter wave radio communication in a 28-GHz band or the like is used.

In backhaul communication using the IAB technique, a relay apparatus called an IAB node relays, by millimeter wave communication, communication from a base station called an IAB donor. By using the IAB technique, it is possible to widen the coverage of an area at low cost, as compared with wired communication by a conventional optical fiber or the like.

Further, a technique has been proposed in which a UE monitors the radio link status and issues a failure notification to a base station if a problem occurs, and the base station having received the notification requests the UE to execute handover, as needed (PTL 2).

If IAB is used, a UE periodically notifies a base station of peripheral environment information (such as radio wave intensity information between the UE and an IAB node existing on the periphery) in backhaul communication. Upon receiving the peripheral environment information from the UE, the base station requests the user equipment to execute handover to another IAB node, as needed.

### CITATION LIST

### PATENT LITERATURE

PTL 1: Japanese Patent Laid-Open No. 2019-534625
PTL 2: Japanese Patent Laid-Open No. 2018-121345

### SUMMARY OF INVENTION

### TECHNICAL PROBLEM

In a status in which many UEs are concentrated (in a stadium event, a large-scale offline event, a disaster site, or the like), a peripheral IAB node connected to the many UEs may reach a high load state. Further, if a relay station does not function due to a disaster, a relatively alive and well relay station may reach a high load state.

In such cases, to reduce the load on the IAB node, an IAB node (to be referred to as a "backup IAB node" hereinafter) that is installed in a vehicle or the like and is usable as a temporary relay station may be installed. In that case, it is necessary to attempt appropriate load distribution between the IAB node in a high load state and the backup IAB node.

However, in the conventional handover technique, handover is executed only when the UE is disconnected from the currently connected IAB node or when the base station recognizes that handover is necessary based on peripheral environment information collected from the UE. In the status described above, since the radio wave intensity between the UE and the IAB node has not decreased, no disconnection decision is made. Further, the peripheral environment information notification from the UE to the base station may be significantly delayed due to congestion. Therefore, there is a problem that it is difficult to quickly distribute the load using the backup IAB node.

The present invention has been made in consideration of the above problem, and provides a technique that enables more efficient communication.

### SOLUTION TO PROBLEM

To solve the above problem, a communication apparatus according to the present invention has the following arrangement. That is, a communication apparatus operating as an IAB (Integrated Access and Backhaul) donor configured to communicate with a first IAB node in a mobile communication system comprises
detection means for detecting a second IAB node different from the first IAB node, and
transmission means for transmitting, in accordance with detection of the second IAB node by the detection means, a handover request for handing over user equipment connected to the first IAB node to the second IAB node.

### ADVANTAGEOUS EFFECTS OF INVENTION

According to the present invention, it is possible to provide a technique that enables more efficient communication. Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram showing the hardware arrangement of a communication apparatus;
Fig. 2 is a block diagram showing the functional arrangement of the communication apparatus;
Fig. 3A is a view showing a system configuration before load distribution;
Fig. 3B is a view showing a system configuration after load distribution;
Fig. 4 is a view showing the sequence of general handover;
Fig. 5 is a view showing the sequence of handover in the first embodiment;
Fig. 6A is a general operation flowchart of an IAB donor concerning reception of notification information;
Fig. 6B is a general operation flowchart of the IAB donor concerning reception of a peripheral environment information notification;
Fig. 7 is an operation flowchart of the IAB donor in the first embodiment;
Fig. 8 is a view showing the sequence of handover in the second embodiment;
Fig. 9 is an operation flowchart of an IAB donor in the second embodiment;
Fig. 10 is an operation flowchart of a UE in the second embodiment; and
Fig. 11 is a view showing the sequence of handover in a modification.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

As the first embodiment of a communication apparatus according to the present invention, a communication apparatus operating as a base station and an IAB donor in a mobile communication system will be exemplified below. The mobile communication system is, for example, a 5th generation (5G) mobile communication system. One or more IAB nodes are connected to the IAB donor, and a UE communicates with the IAB donor via the IAB node serving as a relay node. The IAB node can be a RAN (Radio Access Network) node that supports both an NR (New Radio) access link and an NR backhaul link.

### <Arrangement of Apparatus>

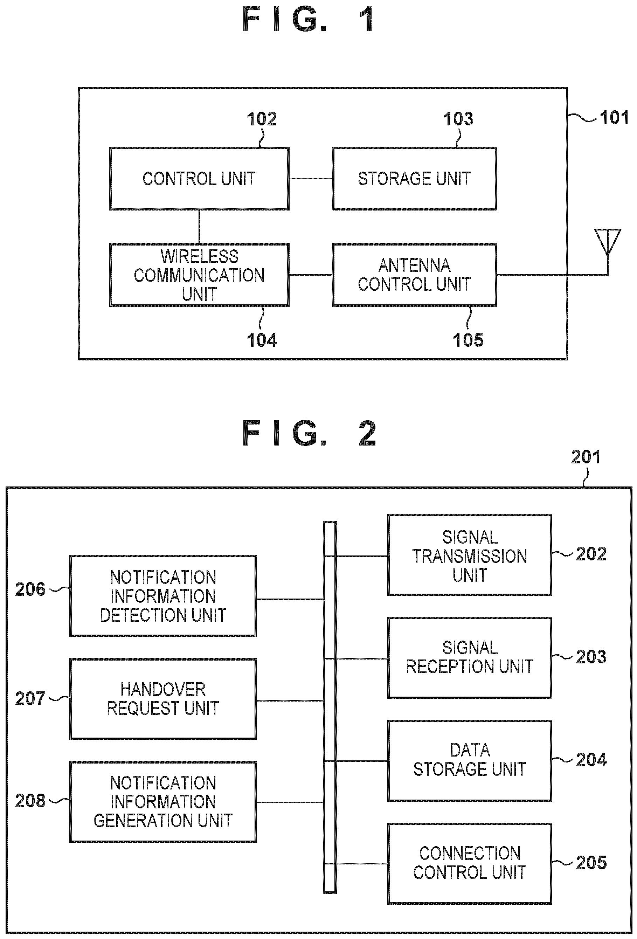

Fig. 1 is a block diagram showing an example of the hardware arrangement of a communication apparatus that functions as an IAB donor or an IAB node. A communication apparatus 101 includes a control unit 102, a storage unit 103, a wireless communication unit 104, and an antenna control unit 105. The control unit 102 controls the overall apparatus by executing control programs stored in the storage unit 103. The storage unit 103 stores control programs to be executed by the control unit 102 and various kinds of information (cell information, connection terminal information, IAB routing information, and the like) to be used for control. Various operations to be described later are implemented when the control unit 102 executes the control programs stored in the storage unit 103. The wireless communication unit 104 executes cellular network communication such as LTE or 5G communication complying with the 3GPP standard. The antenna control unit 105 controls an antenna for wireless communication executed by the wireless communication unit 104.

Fig. 2 is a block diagram showing an example of the software functional arrangement of the communication apparatus that functions as an IAB donor or an IAB node. A communication apparatus function 201 includes a signal transmission unit 202, a signal reception unit 203, a data storage unit 204, a connection control unit 205, a notification information detection unit 206, a handover request unit 207, and a notification information generation unit 208. The signal transmission unit 202 and the signal reception unit 203 execute, with another apparatus (such as a UE), cellular network communication such as LTE or 5G communication complying with the 3GPP standard. The data storage unit 204 stores and holds software programs, IAB routing information, information concerning a connected terminal, and the like.

The connection control unit 205 controls wireless communication performed in the wireless communication unit 104. The detection unit 206 detects notification information from an IAB node existing on the periphery. The handover request unit 207 issues a handover request by transmitting a radio resource control (RRC) message to a UE. The notification information generation unit 208 makes a notification of a signal indicating the presence of the self-apparatus (the communication apparatus 101 as an IAB node).

### <System Configuration and Schematic Operation>

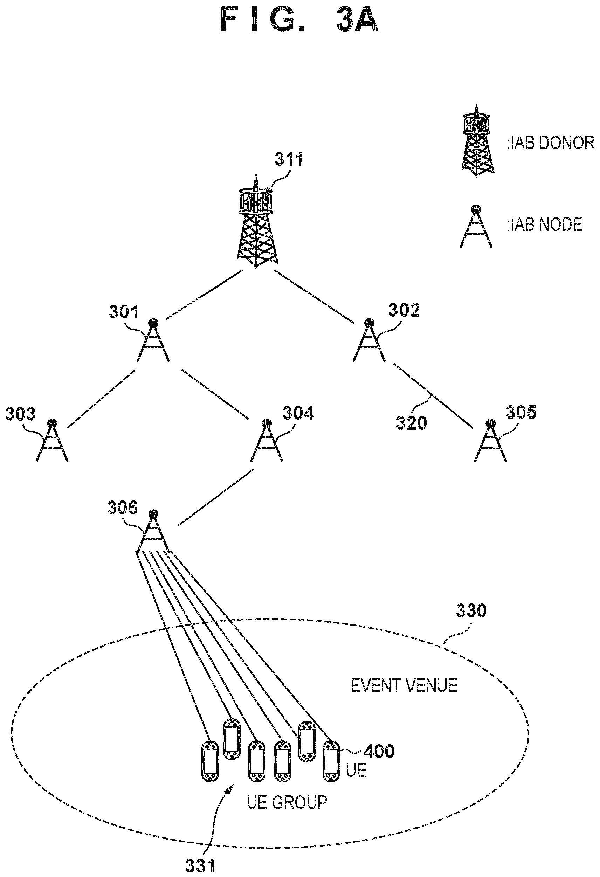

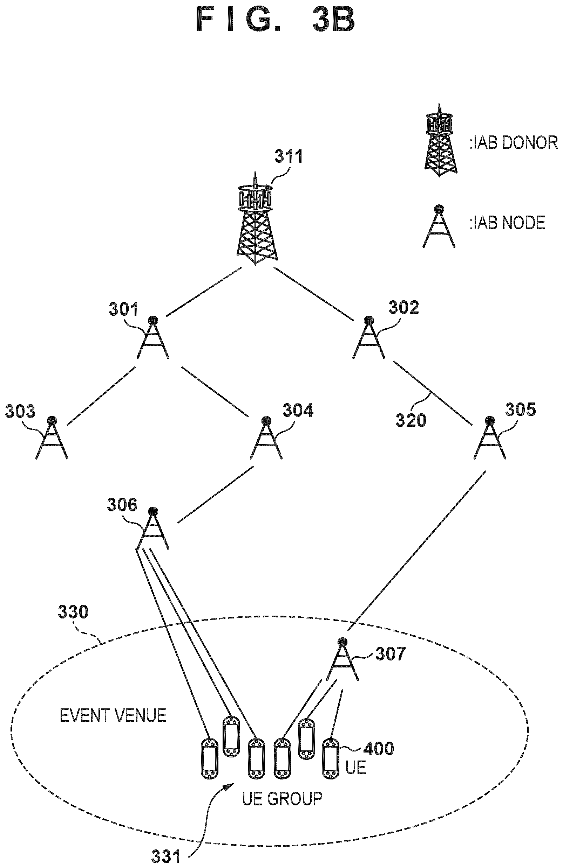

Figs. 3A and 3B are views each showing a system configuration, and especially, exemplarily show states before and after handover of a UE occurs along with load distribution processing (to be described later).

An IAB donor 311 includes IAB nodes 301 to 306 under the control, and is configured to establish communication paths indicated by paths 320 between the donor and the plurality of nodes.

In a large-scale event venue 330, many UEs 400 are concentrated to form a UE group 331. The many UEs 400 included in the UE group 331 are basically connected to the IAB node 306 that is the nearest normal IAB node (a normal IAB node in the best radio wave condition). Therefore, the IAB node 306 is in an extremely high load state. In this case, as shown in Fig. 3B, for the purpose of increasing a communication capacity in the event venue 330 or distributing the load, an IAB node 307 (for example, mounted in a vehicle) as a backup IAB node may be installed.

In this status, there is a demand for quickly attempting to distribute the load from the high-load IAB node 306 to the backup IAB node 307. However, in the current 3GPP standard, handover is executed only when each UE is disconnected from the connected IAB node or when the IAB donor recognizes that handover is necessary based on peripheral environment information collected from the UE.

In the latter case which is handover led by the IAB donor, more specifically, each UE collects peripheral environment information, and notifies the IAB donor 311 of the peripheral environment information, and the IAB donor 311 analyzes the notified peripheral environment information. Then, if the IAB donor 311 determines that it is better to hand over the UE to another IAB node, it notifies the UE of an RRC connection reestablishment request (RRC Reconfiguration message). The format of the RRC Reconfiguration message is defined in 3GPP TR 38.331 6.2.2. By performing this processing, handover of the UE to another IAB node is started.

As described above, in the current 3GPP standard, even if a backup IAB node is input, it is impossible to quickly hand over the UE. That is, it is necessary to wait for disconnection of the UE or determination by the IAB donor. In addition, since the IAB donor receives a peripheral environment information notification from each UE via the IAB node, if the IAB node to be passed through is in a high load state, there is a high possibility of a delay of the peripheral environment information notification from each UE.

To solve the problems, in this embodiment, a form will be described in which the IAB donor hands over the UE from the high-load IAB node to the backup IAB node regardless of the presence/absence of reception of a peripheral environment information notification from the UE (without waiting for completion of reception). Particularly, the operation of the system in a case of newly installing the backup IAB node 307 in the event venue 330 (Fig. 3B) in the situation where the UE 400 constructs a communication path with the IAB donor 311 via the IAB node 306 (Fig. 3A) will be described.

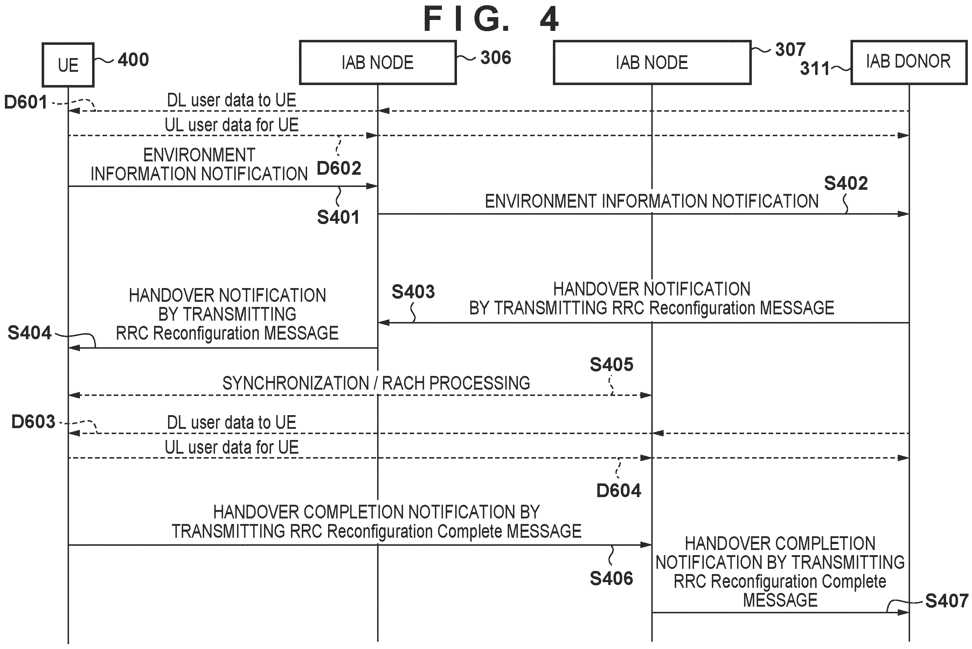

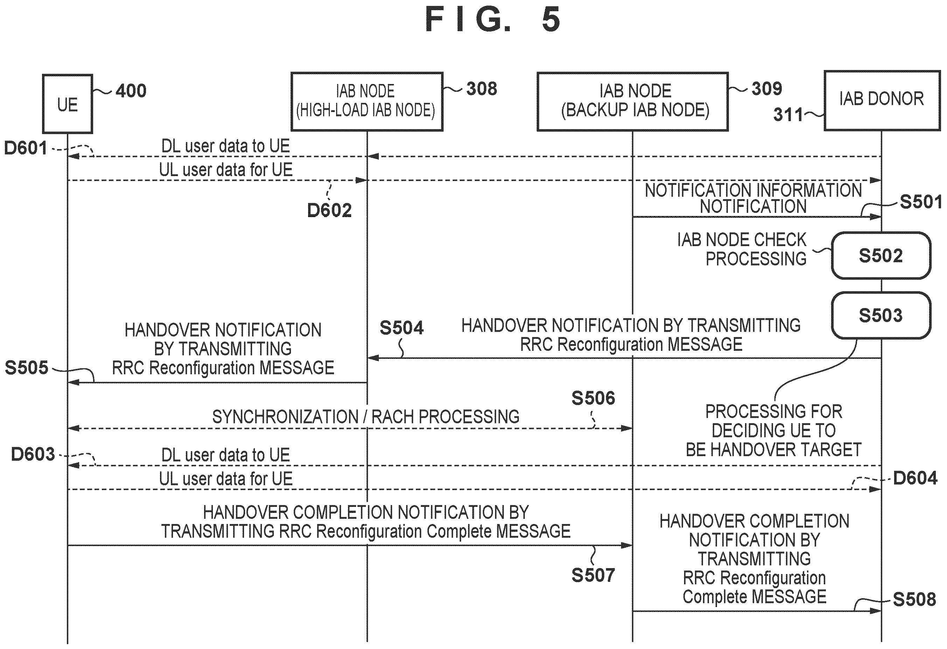

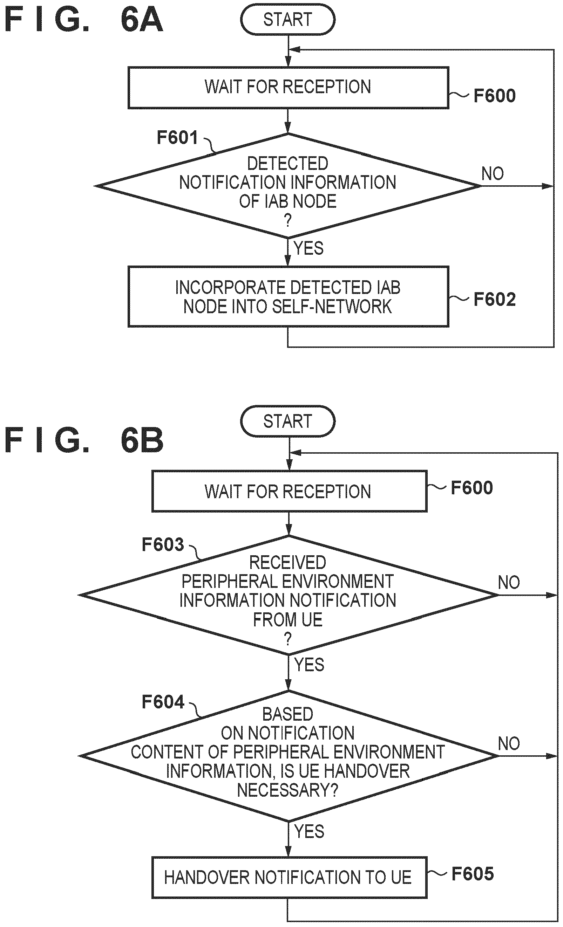

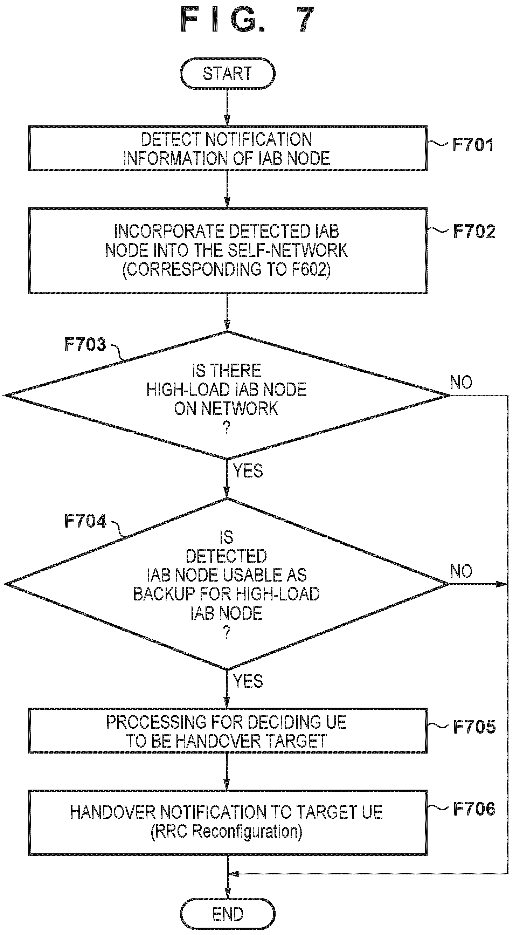

First, a general operation of handover led by the IAB donor according to the 3GPP standard will be described below with reference to Figs. 4, 6A, and 6B. Then, the operation of handover led by the IAB donor in the first embodiment will be described with reference to Figs. 5 and 7.

### <General Handover Operation According to 3GPP Standard>

Fig. 4 is a view showing a general sequence of handover led by the IAB donor. More specifically, Fig. 4 shows processing in a case of handing over a UE by determining the necessity of handover of the UE based on the peripheral environment information notified from the UE.

In S401, the UE 400 transmits its peripheral environment information to the IAB node 306 to notify the IAB donor 311 of the peripheral environment information. The peripheral environment information includes, for example, RSSI information with the IAB node existing on the periphery of the UE. In S402, the IAB node 306 transmits (transfers) the received peripheral environment information to the IAB donor 311.

In S403, based on the peripheral environment information notified from the UE 400, the IAB donor 311 transmits a handover notification to the IAB node 306 to notify the notification source UE 400 of the handover notification, as needed. For this notification, an RCC Reconfiguration message defined in the 3GPP standard is used. In S404, the IAB node 306 transmits (transfers) the received handover notification to the UE 400.

In S405, the UE 400 having received the handover notification executes synchronization establishment processing and RACH processing for the IAB node 307 and is connected to the IAB node 307. The synchronization establishment processing and RACH processing are defined in the 3GPP standard, and executed when the UE is connected to the IAB node for the first time. More specifically, they indicate processing of executing synchronization and RACH (Random Access Channel) frequency decision processing between the UE and the IAB node and establishing link synchronization between the UE and the IAB node.

In S406, to notify the IAB donor 311 of a handover completion notification, the UE 400 transmits the handover completion notification to the IAB node 306. For this notification, an RRC Reconfiguration Complete message defined in the 3GPP standard is used. In S407, the IAB node 306 transmits (transfers) the received handover completion notification to the IAB donor 311.

Fig. 6A shows a general operation flowchart of the IAB donor concerning reception of notification information. Fig. 6B shows a general operation flowchart of the IAB donor concerning reception of a peripheral environment information notification. The order of these reception waiting processing operations is not limited, and the processing corresponding to the received contents is sequentially executed. Normally, the IAB donor is waiting for detection of notification information from an IAB node trying to connect to the self-network and reception of peripheral environment information notified from the UE under the network (step F600).

In step F601, the IAB donor determines whether notification information from an IAB node is detected. If notification information is detected, the process advances to step F602. If no notification information is detected, the process returns to step F600.

In step F602, to make the IAB node having transmitted the detected notification information available in the self-network, the IAB donor executes processing of incorporating the IAB node into the self-network, such as path information reconstruction. After that, the process returns to step F600. However, for example, if there is a reception waiting end instruction, the process ends.

In step F603, the IAB donor determines whether a peripheral environment information notification is received from a UE (via the IAB node). If a peripheral environment information notification is received, the process advances to step F604. If no peripheral environment information notification is received, the process returns to step F600.

In step F604, the IAB donor checks the contents of the peripheral environment information notification, and determines whether handover of the UE having transmitted the peripheral environment information notification is necessary. If it is determined that handover is necessary, the process advances to step F605. If it is determined that handover is not necessary, the process returns to step F600.

In step F605, the IAB donor transmits a handover notification to the UE (via the IAB node).

### <Handover Operation in First Embodiment>

Fig. 5 is a view showing the sequence of handover led by the IAB donor in the first embodiment. In this sequence, an IAB node 308 is defined as a high-load IAB node (corresponding to the IAB node 306), and an IAB node 309 is defined as a backup IAB node (corresponding to the IAB node 307).

The UE 400 constructs a communication path with the IAB donor 311 via the IAB node 308. To attempt to distribute the load on the IAB node 308, the IAB node 309 is newly installed.

In S501, the IAB node 309 transmits notification information by a Beacon, a dedicated message, or the like to make a notification of the presence of itself. At this time, the notification information may include information indicating that "the self-node is an IAB node installed as a backup" or information indicating that "the self-node is an IAB node installed as the backup for the IAB node 308".

The notification information is sent in accordance with the 3GPP standard (9.3.1 of 3GPP TS 38.413), especially a notification information format defined in Radio Network Layer. This format is a format that allows a notification by including up to 256 types of information. The above-described notification information is added to a portion of a reserved area or free area in the current standard, and is sent.

In S502, the IAB donor 311 having detected the notification information from the IAB node 309 performs IAB node check processing. In this check processing, it is determined whether the detected IAB node is usable as the backup IAB node for the IAB node 308.

For example, by using the position information of each of the IAB node 308 and the IAB node 309, it is determined from the positional relationship between the two IAB nodes whether the IAB node 309 exists at a position where it is usable as the backup IAB node. Alternatively, it may be determined whether the notification information includes information indicating that "the self-node is an IAB node installed as a backup" or information indicating that "the self-node is an IAB node installed as the backup for the IAB node 308".

In S503, the IAB donor 311 executes processing of deciding one or more UEs to be handover execution targets. That is, this is processing for selecting, from the UEs connected to the high-load IAB node, one or more UEs to be handed over to the backup IAB node. This decision processing is executed if it is determined in the above-described determination processing that the UE connected to the high-load IAB node may be connected to the backup IAB node to distribute the load.

For example, the determination is made based on "the number of UEs connected to the high-load IAB node (for example, whether the number of UEs exceeds a separately determined threshold) or "weighting based on the used band quantity of the handover target UE", and one or more UEs that can achieve effective load distribute are set as handover targets. For example, the UEs over the threshold are randomly selected and decided as the handover targets. Alternatively, based on the information of the used band quantity of each UE (the ratio of load on each UE in the high-load IAB node), for example, one or more UEs may be selected in the descending or ascending order of the used band quantity.

In S504, the IAB donor 311 transmits a handover notification to the IAB node 308 to notify the UE set as the handover target of the handover notification. For this notification, the RRC Reconfiguration message defined in the 3GPP standard is used. More specifically, a dedicated SIB1-Delivery message in the defined format is used to designate the ID of the IAB node 309 as a reconnection destination. Alternatively, a new definition dedicated for this notification may be added to an RRC Reconfiguration message field. In S505, the IAB node 308 transmits (transfers) the received handover notification to the UE 400.

The UE 400 having received the handover notification executes handover to the designated IAB node 309. The subsequent processing (S506 to S508) is similar to the general handover operation (S405 to S407) according to the 3GPP standard.

Fig. 7 shows an operation flowchart of the IAB donor in the first embodiment. The IAB donor is waiting for reception of detection of notification information from an IAB node trying to connect to the self-network.

In step F701, the IAB donor detects notification information from an IAB node. The following description is given assuming that notification information is detected.

In step F702, the IAB donor executes processing of incorporating the IAB node having transmitted the detected notification information into the self-network (this processing is similar to step F602).

In step F703, the IAB donor executes load determination as to whether there is a high-load IAB node on the network (among one or more IAB nodes under the control of the IAB donor). If it is determined that a high-load IAB node exists, the process advances to step F704. If it is determined that a high-load IAB node does not exist, the process ends.

For example, a threshold for the processing load or traffic congestion rate is used as the determination criterion, and the IAB node that is frequently in a high-load state or congested is detected as a high-load IAB node.

In step F704, the IAB donor determines whether the IAB node having transmitted the notification information detected in step F701 is usable as the backup IAB node for the high-load IAB node. If it is determined that the IAB node is usable as the backup IAB node, the process advances to step F705. If it is determined that the IAB node is not usable as the backup IAB node, the process ends.

For example, by using the position information of the high-load IAB node and the position information of the detected IAB node, it is determined from the positional relationship between the two IAB nodes whether the detected IAB node exists at a position where it is usable as the backup IAB node. Alternatively, it may be determined whether the notification information detected in step F701 includes information indicating that "the self-node is an IAB node installed as a backup" or information indicating that "the self-node is an IAB node installed as the backup for a specific high-load IAB node".

In step F705, the IAB donor executes processing of deciding the UE to be the handover target. That is, the IAB donor determines the UE to be the handover execution target among the UEs connected to the high-load IAB node.

This determination processing is executed to appropriately hand over the UE connected to the high-load IAB node to the backup IAB node. For example, the determination is made based on "the number of UEs connected to the high-load IAB node (for example, whether the number of UEs exceeds a separately determined threshold) or "weighting based on the used band quantity of the handover target UE", and one or more UEs that can achieve effective load distribute are set as handover targets.

In step F706, the IAB donor transmits a handover notification to one or more UEs decided in step F705. For this notification, the RRC Reconfiguration message defined in the 3GPP standard is used. More specifically, a dedicated SIB 1-Delivery message in the defined format is used to designate the ID of the backup IAB node as a reconnection destination. Alternatively, a new definition dedicated for this notification may be added to an RRC Reconfiguration message field.

The order of steps F701 to F706 is not limited to the order described above. For example, the processing order of steps F703 and F704 may be changed. If information indicating that "the self-node is an IAB node installed as the backup for a specific high-load IAB node" is included in the notification information detected in step F701, this IAB node may be regarded to be intentionally installed. That is, this IAB node may be regarded to be installed as the backup IAB node which is not limited to be used for load distribution of a high-load IAB node. In this case, even if a high-load IAB node cannot be detected on the network in step F703, handover notification for the UE may be executed (steps F705 and F706).

As has been described above, according to the first embodiment, if a new IAB node is detected and a predetermined condition is satisfied, handover led by the IAB donor is executed. Here, the predetermined condition is that one or more existing IAB nodes include a high-load IAB node and the new IAB node is usable as the backup for the high-load IAB node. That is, one or more UEs are handed over from the high-load IAB node to the backup IAB node without waiting for detection of disconnection of the UEs or peripheral environment information notifications from the UEs.

With this control, if a new IAB node is installed in a status in which many UEs are concentrated, it is possible to quickly hand over the UEs and effectively distribute the communication load.

### (Second Embodiment)

In the second embodiment, a form will be described in which, in addition to the operation in the first embodiment, the UE having received a handover notification from the IAB donor checks whether or not a handover is possible. This form assumes a case where it is desirable to limit the UE connectable to the backup IAB node to the UE used by an event participant. Note that the apparatus arrangement, the system configuration, and the operations of the IAB donor and IAB node are similar to those in the first embodiment (Figs. 1 to 3B, 5, and 7), and a description thereof will be omitted.

### <Handover Operation in Second Embodiment>

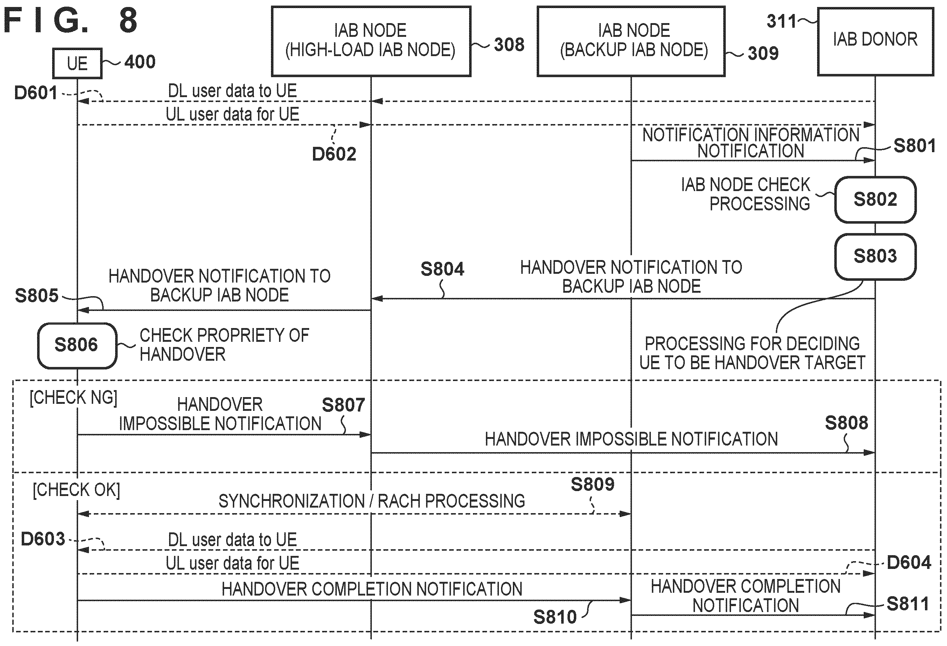

Fig. 8 is a view showing the sequence of handover led by the IAB donor in the second embodiment. In this sequence, as in the first embodiment, an IAB node 308 is defined as a high-load IAB node (corresponding to an IAB node 306), and an IAB node 309 is defined as a backup IAB node (corresponding to an IAB node 307).

A UE 400 constructs a communication path with an IAB donor 311 via the IAB node 308. To attempt to distribute the load on the IAB node 308, the IAB node 309 is newly installed. The processing in S801 to S803 is similar to the processing in the first embodiment (S501 to S503), and a description thereof will be omitted.

In S804, the IAB donor 311 transmits a handover notification to the IAB node 308 to notify the UE 400 set as the handover target of the handover notification. In S805, the IAB node 308 transmits (transfers) the received handover notification to the UE 400.

For this notification, an RRC Reconfiguration message defined in the 3GPP standard is used. More specifically, a dedicated SIB1-Delivery message in the defined format is used to designate the ID of the IAB node 309 as a reconnection destination. Alternatively, a new definition dedicated for this notification may be added to an RRC Reconfiguration message field. For example, as the information of a new definition, information indicating "handover to a backup node" is added. By giving this information, the UE having received the handover notification can recognize that this handover is handover to the backup IAB node.

In S806, the UE 400 having received the handover notification checks the whether or not a handover to the designated backup IAB node (IAB node 309 here) is possible.

If it is determined in S806 that handover is impossible (NG in check), the UE 400 transmits a handover impossible notification to the IAB donor 311 via the IAB node 308 in S807 and S808. Several methods are available as a method of notifying the IAB donor of this message. For example, a method of notifying the message by including handover impossible information in an RRC Reconfiguration Complete message is available. A method of newly setting an RRC message for this message is also available.

If it is determined in S806 that handover is possible (OK in check), the UE 400 executes handover to the designated IAB node 309. The processing (S809 to S811) in this case is similar to the general handover operation (S405 to S407) according to the 3GPP standard.

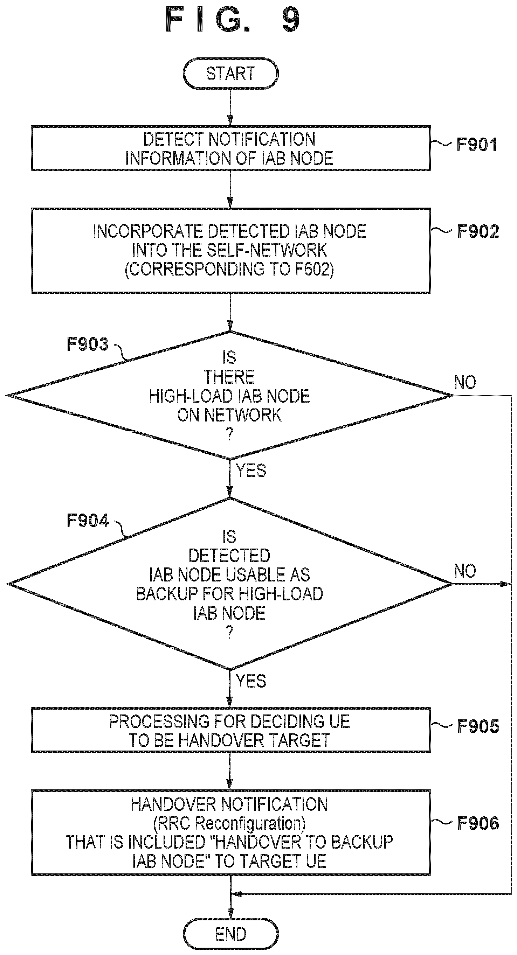

Fig. 9 shows an operation flowchart of the IAB donor in the second embodiment. Note that the processing except step F906 is similar to the processing (F701 to F705) in the first embodiment, and a description thereof will be omitted.

In step F906, the IAB donor transmits a handover notification to one or more UEs decided in step F905. For this notification, the RRC Reconfiguration message defined in the 3GPP standard is used. Here, a new definition indicating "handover to a backup node" is added to the RRC Reconfiguration message field.

Note that the order of steps F901 to F906 is not limited to the order described above. For example, the processing order of steps F903 and F904 may be changed.

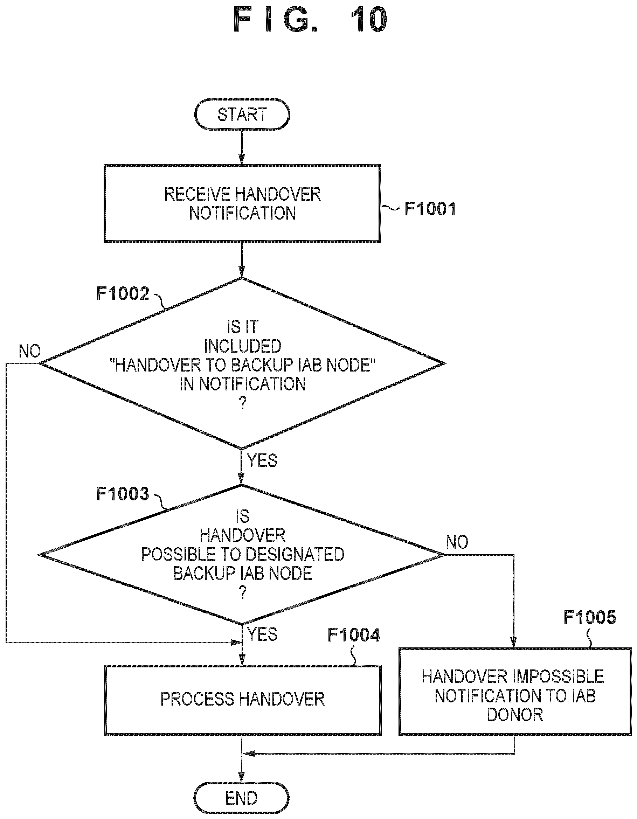

Fig. 10 shows an operation flowchart of a UE in the second embodiment. This flowchart assumes that the UE receives a handover notification.

In step F1001, the UE receives a handover notification from the IAB donor.

In step F1002, the UE determines whether information indicating "handover to a backup node" is included in the handover notification. If the information is included, the process advances to step F1003. If the information is not included, the process advances to F1004. Note that if the IAB donor makes the general handover notification (according to the 3GPP standard) shown in Fig. 6B, information indicating "handover to a backup node" is not included in the notification.

In step F1003, the UE regards the received handover notification as a notification of handover to a backup IAB node. Then, the UE determines whether handover to the designated backup IAB node is possible. If it is determined that handover is possible, the process advances to step F1004. If it is determined that handover is impossible, the process advances to step F1005.

As the determination method, for example, a method of checking whether the UE has passed specific authentication (such as MAC address authentication or 802.1X authentication) in advance is available. For example, the UE is set to access in advance the authentication site provided by the business operator. If authentication is successful, information indicating that authentication is successful is stored in system information. At this time, if the business operator prepares a backup IAB node, information capable of identifying the backup IAB node may also be stored. The UE refers to the system information upon the check in S806, and decides whether or not a handover is possible based on the current authentication status.

As another example, a method of checking whether the backup IAB node really exists within the connection range of the handover target UE is available. That is, the conventional handover led by the IAB donor is based on the peripheral environment information notification from the UE. That is, the IAB donor receives the peripheral environment information notification from the UE, and it can be guaranteed that the backup IAB node exists within the connection range of the UE. However, this is not guaranteed in the second embodiment, so that the check as described above is assumed.

As a specific check method, for example, there is a method of checking whether the designated backup IAB node exists in the IAB node list generated by the UE scanning the peripheral environment. There is also a method of checking whether the designated backup IAB node exists by the UE scanning the peripheral environment at the timing of receiving the handover request.

In step F1004, the UE executes normal handover processing (according to the 3GPP standard). On the other hand, in step F1005, the UE transmits a handover impossible notification to the IAB donor. Several methods are available as a method of notifying the IAB donor of this message. For example, a method of notifying the IAB donor of the message by including handover impossible information in an RRC Reconfiguration Complete message, a method of newly setting an RRC message for this message, and the like are available.

As has been described above, according to the second embodiment, the US having received a handover notification checks whether or not a handover is possible. For example, to limit the UE connectable to the backup IAB node to the UE used by an event participant, whether or not a handover is possible is determined by checking whether the UE has passed specific authentication in advance. Even in the situation in which the existence of the backup IAB node within the connection range of the UE is not guaranteed, it is possible to appropriately control load distribution.

### (Modification)

In the first embodiment and the second embodiment, it has been described that the IAB donor decides the handover target UE, but the existing (high-load) IAB node may be configured to decide the handover target UE.

### <Handover Operation in Modification>

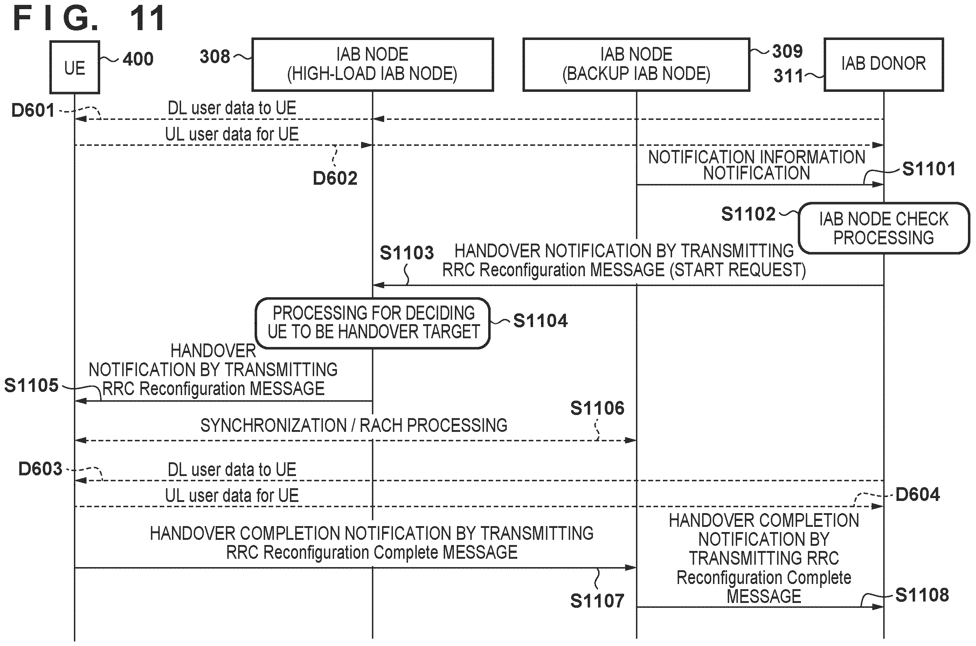

Fig. 11 is a view showing the sequence of handover led by the IAB donor in a modification. In this sequence, as in the first embodiment, the IAB node 308 is defined as a high-load IAB node (corresponding to the IAB node 306), and the IAB node 309 is defined as a backup IAB node (corresponding to the IAB node 307).

The UE 400 constructs a communication path with the IAB donor 311 via the IAB node 308. To attempt to distribute the load on the IAB node 308, the IAB node 309 is newly installed. The processing in S1101 to S1102 and S1106 to S1108 is similar to the processing (S501 to S502 and S506 to S508) in the first embodiment, and a description thereof will be omitted.

In S1103, the IAB donor 311 transmits a handover notification to the IAB node 308 to notify the IAB node 308 of a UE handover start request. For this notification, an RRC Reconfiguration message defined in the 3GPP standard is used. However, at this point of time, the handover start request is included but the specific handover target UE is not designated. Therefore, a new definition for indicating the handover start request may be added in the message field.

In S1104, the IAB node 308 executes processing of deciding one or more UEs to be handover targets. This decision processing is similar to the processing (S503 and S803) executed by the IAB donor in the first and second embodiments.

In S1105, the IAB node 308 transmits (transfers) the handover notification received in S1103 to the one or more UEs decided in S1104.

Note that in S1104, the IAB node 308 may make a determination based on whether the connected UE has passed specific authentication. In this case, the IAB node 308 may be configured to acquire, from the IAB donor 311, information indicating whether each UE has passed specific authentication.

For example, the UE is set to access in advance the authentication site provided by the business operator. If authentication is successful, information indicating that authentication is successful is stored in system information. The UE notifies the IAB donor of this information in the environment information notification processing with the IAB donor. At this time, if the business operator prepares a backup IAB node, information capable of identifying the backup IAB node may also be stored. For example, a region for this information may be newly set in the MeasurementReport-IEs field in the MeasurementReport message to notify the IAB donor of the information.

With this, the IAB donor can specify the UE of an event participant from the peripheral environment information of the UE acquired before congestion. Accordingly, it is possible to suppress the handover notification to the UE not belonging to an event participant, thereby reducing the number of messages in the overall system.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-083990 filed May 23, 2022, which is hereby incorporated by reference herein.

## Claims

1. A communication apparatus operating as an IAB (Integrated Access and Backhaul) donor configured to communicate with a first IAB node in a mobile communication system, **characterized by** comprising:
detection means for detecting a second IAB node different from the first IAB node; and
transmission means for transmitting, in accordance with detection of the second IAB node by the detection means, a handover request for handing over user equipment connected to the first IAB node to the second IAB node.

2. The communication apparatus according to claim 1, **characterized by** further comprising
determination means for determining whether the second IAB node is usable for load distribution of the first IAB node,
wherein if it is determined by the determination means that the second IAB node is usable for load distribution of the first IAB node, the transmission means transmits the handover request.

3. The communication apparatus according to claim 2, **characterized by** further comprising
load determination means for determining whether the first IAB node is in a higher load state than a predetermined threshold,
wherein the determination means determines whether the second IAB node is usable for load distribution of the first IAB node determined to be in a higher load state by the load determination means.

4. The communication apparatus according to any one of claims 1 to 3, **characterized in that**
the mobile communication system is a 5th generation (5G) mobile communication system, and
the first IAB node and the second IAB node support both a backhaul link and an access link.

5. The communication apparatus according to any one of claims 1 to 4, **characterized in that**
the transmission means transmits the handover request by using a radio resource control (RRC) message.

6. The communication apparatus according to any one of claims 1 to 5, **characterized in that**
the transmission means transmits the handover request regardless of presence/absence of reception of a peripheral environment information notification from user equipment connected to the first IAB node.

7. The communication apparatus according to any one of claims 1 to 6, **characterized in that**
the detection means detects the second IAB node by receiving notification information indicating presence of the second IAB node, and
the notification information includes first information indicating that the second IAB node is an IAB node installed as a backup node for the first IAB node.

8. The communication apparatus according to claim 7, **characterized in that**
if the first information is included in the notification information, the transmission means includes information indicating handover to a backup node in the handover request.

9. The communication apparatus according to claim 2, **characterized in that**
the determination means determines, based on position information of the first IAB node and position information of the second IAB node, whether the second IAB node is usable for load distribution of the first IAB node.

10. The communication apparatus according to claim 2, **characterized in that**
the detection means detects the second IAB node by receiving notification information indicating presence of the second IAB node, and
the determination means determines whether the second IAB node is usable for load distribution of the first IAB node based on whether the notification information includes first information indicating that the second IAB node is an IAB node installed as a backup for the first IAB node.

11. The communication apparatus according to any one of claims 1 to 10, **characterized by** further comprising
decision means for deciding one or more pieces of user equipment to be targets of handover in the handover request,
wherein the transmission means transmits the handover request to the one or more pieces of user equipment decided by the decision means.

12. The communication apparatus according to claim 11, **characterized in that**
if the number of pieces of user equipment connected to the first IAB node exceeds a threshold, the decision means decides the pieces of user equipment the number of which exceeds over the threshold as one or more pieces of user equipment to be targets of handover.

13. The communication apparatus according to claim 11, **characterized in that**
the decision means decides one or more pieces of user equipment to be targets of handover based on information of a used band quantity of each user equipment connected to the first IAB node.

14. The communication apparatus according to claim 11, **characterized in that**
the decision means decides one or more pieces of user equipment to be targets of handover based on an authentication status of each user equipment connected to the first IAB node in a predetermined authentication site.

15. A mobile communication system including a base station, a first relay node, and user equipment configured to communicate with the base station via the first relay node, **characterized in that**
the base station comprises
detection means for detecting a second relay node different from the first relay node, and
transmission means for transmitting, in accordance with detection of the second relay node by the detection means, a handover request for handing over user equipment connected to the first relay node to the second relay node, and
the user equipment comprises
reception means for receiving the handover request from the base station, second determination means for determining whether handover to the second relay node indicated by the handover request is possible, and
notification means for issuing a notification to the base station if the second determination means determines that handover to the second relay node is impossible.

16. A mobile communication system including a base station, a first relay node, and user equipment configured to communicate with the base station via the first relay node, **characterized in that**
the base station comprises
detection means for detecting a second relay node different from the first relay node, and
first transmission means for transmitting, to the first relay node in accordance with detection of the second relay node by the detection means, a first handover request for handing over user equipment connected to the first relay node to the second relay node, and
the first relay node comprises
reception means for receiving the first handover request from the base station,
decision means for deciding one or more pieces of user equipment to be targets of handover based on the first handover request, and
second transmission means for transmitting, to the one or more pieces of user equipment decided by the decision means, a second handover request instructing handover to the second relay node.

17. A control method of a communication apparatus operating as an IAB donor configured to communicate with a first IAB node in a mobile communication system, **characterized by** comprising:
a detection step of detecting a second IAB node different from the first IAB node; and
a transmission step of transmitting, in accordance with detection of the second IAB node in the detection step, a handover request for handing over user equipment connected to the first IAB node to the second IAB node.

18. A program for causing a computer including a communication unit to operate as a communication apparatus defined in any one of claims 1 to 14.
